(19) Europäisches Patentamt
European Patent Office
Office européen des brevets

(11) EP 4 421 143 A1

(12) EUROPEAN PATENT APPLICATION
published in accordance with Art. 153(4) EPC

(43) Date of publication:
**28.08.2024 Bulletin 2024/35**

(21) Application number: **23847633.7**

(22) Date of filing: **05.06.2023**

(51) International Patent Classification (IPC):
***C09J 133/14*** *(2006.01)* ***C09J 133/08*** *(2006.01)*
***C09J 11/04*** *(2006.01)* ***H01M 50/431*** *(2021.01)*
***H01M 50/443*** *(2021.01)*

(86) International application number:
**PCT/CN2023/098414**

(87) International publication number:
**WO 2024/146064 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.01.2023 CN 202310015629**

(71) Applicant: **Contemporary Amperex Technology Co., Limited**
**Ningde, Fujian 352100 (CN)**

(72) Inventors:
- **KANG, Haiyang**
  **Ningde, Fujian 352100 (CN)**
- **ZHENG, Yi**
  **Ningde, Fujian 352100 (CN)**
- **SUN, Chengdong**
  **Ningde, Fujian 352100 (CN)**
- **YU, Yang**
  **Ningde, Fujian 352100 (CN)**
- **OUYANG, Chuying**
  **Ningde, Fujian 352100 (CN)**

(74) Representative: **Kraus & Lederer PartGmbB**
**Thomas-Wimmer-Ring 15**
**80539 München (DE)**

# (54) BINDER, SEPARATOR, ELECTRODE SHEET, ELECTRODE ASSEMBLY, BATTERY CELL, BATTERY, AND ELECTRIC DEVICE

(57) This application discloses a binder, a separator, an electrode plate, an electrode assembly, a battery cell, a battery, and an electric apparatus, and relates to the field of battery technologies. The binder includes an organic polymer and an inorganic substance, and the binder has a first glass transition temperature and a second glass transition temperature within a range of -10°C to 95°C, where the first glass transition temperature is higher than the second glass transition temperature. The organic polymer and the inorganic substance act together to obtain the binder with good adhesion performance and appropriate glass transition temperatures, suitable for fully exerting the adhesion performance of the binder under battery operation conditions, and thereby improving the kinetic and safety performance of batteries.

5

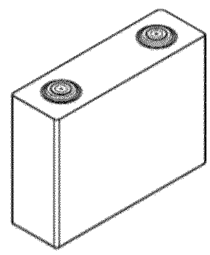

FIG. 1

EP 4 421 143 A1

## Description

### CROSS-REFERENCE TO RELATED APPLICATIONS

This application claims priority to Chinese Patent Application No. 202310015629.2, filed with the China National Intellectual Property Administration on January 4, 2023 and entitled "BINDER AND RELATED SEPARATOR, ELECTRODE PLATE, BATTERY, BATTERY MODULE, BATTERY PACK, AND ELECTRIC APPARATUS", which is incorporated herein by reference in its entirety.

### TECHNICAL FIELD

This application relates to the field of battery technologies and specifically to a binder, a separator, an electrode plate, an electrode assembly, a battery cell, a battery, and an electric apparatus.

### BACKGROUND

In recent years, with increasingly wide use of batteries, batteries have been widely used in energy storage power supply systems such as hydroelectric, thermal, wind, and solar power plants, and many other fields including electric tools, electric bicycles, electric motorcycles, electric vehicles, military equipment, and aerospace. However, battery binders used in the prior art have the problem of poor adhesion performance, which in turn leads to incapability of effectively adhering battery components, thereby deteriorating kinetic performance of batteries and causing safety problems.

### SUMMARY

This application is made in view of the preceding subject matter and aims to provide good adhesion performance under conditions suitable for battery processing, thereby contributing to improving kinetic and safety performance of batteries.

To achieve the above objectives, this application provides a binder, a separator, an electrode plate, an electrode assembly, a battery cell, a battery, and an electric apparatus.

According to a first aspect, an embodiment of this application provides a binder including an organic polymer and an inorganic substance. The binder includes a first glass transition temperature and a second glass transition temperature within a range of -10°C to 95°C, where the first glass transition temperature is higher than the second glass transition temperature.

Therefore, in the technical solution of this embodiment of this application, the organic polymer and the inorganic substance act together to obtain the binder with good adhesion performance and appropriate glass transition temperatures, suitable for fully exerting the adhesion performance of the binder under battery operation conditions, and thereby improving the kinetic and safety performance of batteries.

The glass transition temperature is a temperature at which a high polymer changes from a high-elastic state to a glassy state, and refers to a temperature at which an amorphous polymer (including the non-crystalline part of a crystalline polymer) changes from a glassy state to a high-elastic state or from the latter to the former. It is the lowest temperature at which macromolecular chain segments of an amorphous polymer are free to move, and is usually expressed as Tg. The glass transition temperature is an important process indicator for high polymers. Above the glass transition temperature, the high polymer exhibits elasticity, and below the glass transition temperature, the high polymer exhibits brittleness. The first glass transition temperature of the binder proposed in this application is 30°C to 75°C, suitable for fully exerting the adhesion performance of the binder under battery operation conditions, and thereby contributing to improving the kinetic and safety performance of secondary batteries.

In any embodiment, the first glass transition temperature of the binder is 30°C to 75°C, and the second glass transition temperature of the binder is -10°C to 25°C.

Therefore, excessively low glass transition temperature of the binder leads to excessively soft texture, and a risk of blocking pores of a separator exists. Excessively high glass transition temperature of the binder leads to difficulties in preparing a separator and increased costs of the separator. The binder in this application has the advantage of having two glass transition temperatures, high and low, greatly reducing the risk of pore blocking by the binder and lowering manufacturing costs of the separator.

In any embodiment, the inorganic substance is attached to the surface of the organic polymer and/or dispersed inside the organic polymer. Therefore, with the organic polymer as a framework, the inorganic substance can be dispersed both inside and on the surface of the organic polymer, only inside the organic polymer, or only on the surface of the organic polymer, making the binder suitable for fully exerting its adhesion performance under battery operation conditions,

thereby improving the kinetic and safety performance of batteries.

In any embodiment, polymeric monomers of the organic polymer include a first monomer, where the first monomer has the following constitutional formula:

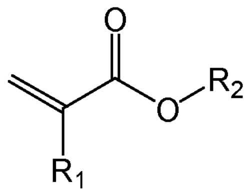

where $R_1$ includes a hydrogen atom, or an alkyl group containing 1 to 6 carbon atoms, $R_2$ includes a substituted or unsubstituted alkyl group containing 1 to 15 carbon atoms or cycloalkyl or isobutenyl group containing 3 to 6 carbon atoms, and in the case of being substituted, a substituent group includes a hydroxyl group or an alkyl group containing 1 to 6 carbon atoms. Therefore, an unsaturated ester group in the first monomer can improve the compatibility of the polymer with electrolyte, enhance the ionic conductivity, and contribute to good adhesion performance by acting as a flexible monomer chain segment in a molecular chain segment for regulating the glass transition temperature of the organic polymer and improving the toughness of the binder during application.

In any embodiment, the first monomer includes at least one of methyl acrylate, ethyl acrylate, n-propyl acrylate, n-butyl acrylate, isobutyl acrylate, sec-butyl acrylate, tert-butyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, 2-hydroxypropyl methacrylate, vinyl acetate, trifluoroethyl methacrylate, glycidyl methacrylate, and trimethylolpropane triacrylate. Experimental results show that using at least one of the above organic substances for polymerization can better regulate the glass transition temperature of the organic polymer, improve the toughness of the binder during application, and help to exert good adhesion performance.

In any embodiment, the first monomer includes at least one of methyl methacrylate, lauryl acrylate, lauryl methacrylate, and trimethylolpropane triacrylate. This further enables the regulation of the glass transition temperature of the organic polymer, improves the toughness of the binder during application, and helps to further exert good adhesion performance.

In any embodiment, the polymeric monomers of the organic polymer further include a second monomer, where the second monomer includes an organic substance containing an unsaturated nitrile group. The organic substance containing an unsaturated nitrile group has a cyano group with strong polarity, helping to increase the ionic conductivity.

In any embodiment, the polymeric monomers of the organic polymer further include a third monomer, where the third monomer includes an organic substance containing an unsaturated amide group, improving the electrolyte resistance.

The polymeric monomers of the organic polymer further include a fourth monomer, where the fourth monomer includes an organic substance containing an unsaturated alkenyl group, further regulating the molecular weight.

In any embodiment, the polymeric monomers of the organic polymer further include a second monomer, where the second monomer has the following constitutional formula:

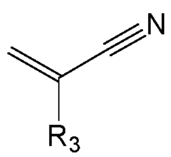

where $R_3$ includes a hydrogen atom, or an alkyl group containing 1 to 6 carbon atoms. The organic substance containing an unsaturated nitrile group has a cyano group with strong polarity, helping to increase the ionic conductivity.

The polymeric monomers of the organic polymer further include a third monomer, where the third monomer has the following constitutional formula:

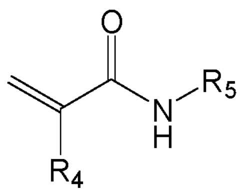

where $R_4$ includes a hydrogen atom, or an alkyl group containing 1 to 6 carbon atoms; $R_5$ includes a hydrogen atom, or a hydroxy group-substituted alkyl group containing 1 to 6 carbon atoms or alkoxy group containing 1 to 6 carbon atoms. The third monomer includes an unsaturated amide group, improving the electrolyte resistance.

The polymeric monomers of the organic polymer further include a fourth monomer, where the fourth monomer has the following constitutional formula:

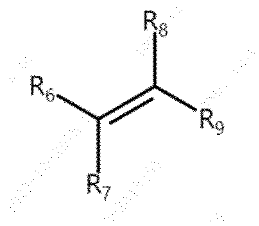

where $R_6$, $R_7$, $R_8$, and $R_9$ each independently includes a hydrogen atom, a substituted or unsubstituted phenyl group, a substituted or unsubstituted cycloalkyl group, or a straight-chain or branched-chain alkyl group. The fourth monomer includes an unsaturated alkenyl group, further regulating the molecular weight.

In any embodiment, the second monomer includes at least one of acrylonitrile, methacrylonitrile, and ethyl acrylonitrile. Further, the second monomer includes at least one of acrylonitrile and methacrylonitrile. Experimental results show that using at least one of the above organic substances as the second monomer can further regulate the glass transition temperature and improve the electrolyte resistance.

In any embodiment, the third monomer includes an organic substance containing an unsaturated amide group. Specifically, the third monomer includes at least one of acrylamide, N-methylolacrylamide, and N-butoxymethylacrylamide. Further, the third monomer includes at least one of acrylamide and N-methylolacrylamide. Experimental results show that using at least one of the above organic substances as the third monomer can further regulate the molecular weight.

In any embodiment, the fourth monomer includes at least one of ethylene, styrene, butadiene, and isoprene. Experimental results show that using at least one of the above organic substances as the fourth monomer can further regulate the glass transition temperature and improve the electrolyte resistance.

In any embodiment, the polymeric monomers of the organic polymer further include a second monomer and a third monomer, where the second monomer includes an organic substance containing an unsaturated nitrile group, the third monomer includes an organic substance containing an unsaturated amide group, the fourth monomer includes an organic substance containing an unsaturated alkenyl group, and a weight ratio of the first monomer, the second monomer, and the third monomer is 1:0-0.8:0-0.15.

The organic polymer is obtained by polymerizing the first monomer, the second monomer, and the third monomer, which have different functional groups, in a specified proportion. The obtained organic polymer can fully exert the advantages of each polymeric monomer, so that the binder polymer containing the organic polymer has good adhesion performance and a low glass transition temperature, suitable for fully exerting the adhesion performance of the binder polymer under battery operation conditions, and thereby contributing to improving the kinetic and safety performance of secondary batteries. In addition, when the binder is applied to a separator, it helps to reduce the resistance of the separator and improve the ionic conductivity of the separator, thereby improving the battery performance.

In any embodiment, the weight ratio of the first monomer, the second monomer, and the third monomer is 1:0.05-0.2:0.05-0.1. The above ratio helps to further improve the kinetic and safety performance of secondary batteries.

In any embodiment, the polymeric monomers of the organic polymer further include a second monomer, a third monomer, and a fourth monomer, where the second monomer includes an organic substance containing an unsaturated nitrile group, the third monomer includes an organic substance containing an unsaturated amide group, the fourth monomer includes an organic substance containing an unsaturated alkenyl group, and a weight ratio of the first monomer, the second monomer, the third monomer, and the fourth monomer is 1:0-0.8:0-0.7:0-0.5.

By adding the fourth monomer, the types of monomers in the organic polymer are further enriched, and the

function of the unsaturated alkenyl group in the fourth monomer is exerted, so that the binder polymer containing the fourth monomer has good adhesion performance and a low glass transition temperature, suitable for fully exerting the adhesion performance of the binder polymer under battery operation conditions, and thereby contributing to improving the kinetic and safety performance of secondary batteries. In addition, when the binder is applied to a separator, it helps to reduce the resistance of the separator and improve the ionic conductivity of the separator, thereby improving the battery performance.

In any embodiment, the weight ratio of the first monomer, the second monomer, the third monomer, and the fourth monomer is 1:0.05-0.6:0.05-0.3:0-0.2. The above ratio further reduces the resistance of the separator, and improves the ionic conductivity of the separator and the battery performance.

In any embodiment, particle size of the binder satisfies: 3 μm ≤ D50 ≤ 10 μm. When the particle size of the binder D50 is greater than 10 μm, the particle size is excessively large, which increases a gap between the separator and other components and affects the charge and discharge rate of the battery. Additionally, more internal space of the cell is occupied, affecting the energy density of the battery. When the particle size is excessively small, pores in the separator may be blocked. Therefore, the particle size within the above range is more suitable.

The particle size distribution of the binder = (D90 - D10)/D50, where the particle size distribution is less than or equal to 2.5. The particle size distribution represents the uniformity of the binder particles. Larger particle size distribution indicates more uneven binder particles. If the particle size distribution is greater than 2.5, smaller particles fill the gaps between the larger particles, which renders the smaller particles ineffective and may cause blocked pores, resulting in waste.

The particle size of the inorganic substance is 0.0001 μm to 2 μm. The particle size of the inorganic substance being 0.0001 μm to 2 μm enables the inorganic substance to be fully mixed with the organic polymer. In this way, the inorganic substance has low density, and excellent thermal and chemical stability, combined with the rich active functional groups on the material surface, which can also improve the electrolyte infiltration of a separator, accelerate ion transmission speed, and enhance the electrochemical performance of batteries.

In any embodiment, the particle size distribution of the binder = (D90 - D10)/D50, where the particle size distribution is less than 2; and particle size of the inorganic substance is 0.01 μm to 0.5 μm. With the above particle size limitation, the electrolyte infiltration of the separator can be further improved, the ion transmission speed can be accelerated, and the electrochemical performance of batteries can be enhanced.

In any embodiment, the particle size distribution of the binder = (D90 - D10)/D50, where the particle size distribution is less than 1.8; and particle size of the inorganic substance is 0.01 μm to 0.2 μm. Within the above ranges, the binder has good performance in various aspects.

In any embodiment, based on mass of the binder, a mass percentage of the organic polymer is 50% to 99.9%, so that the organic polymer and inorganic substance act together and each plays an important role to make the binder have good adhesion performance, which helps to improve the kinetic and safety performance of batteries.

The inorganic substance includes at least one of an oxide of silicon, an oxide of aluminum, an oxide of calcium, an oxide of zinc, an oxide of magnesium, sodium sulfate, sodium benzoate, calcium carbonate, and modified materials thereof. Using at least one of the inorganic substances, the binder has good adhesion performance, thereby contributing to improving the kinetic and safety performance of batteries.

In any embodiment, based on mass of the binder, a mass percentage of the organic polymer is 60% to 99%; and the inorganic substance includes at least one of fumed silicon dioxide, silicon micro-powder, aluminum oxide, and sodium benzoate. Under the above conditions, the binder has good adhesion performance, further improving the kinetic and safety performance of batteries.

In any embodiment, based on mass of the binder, a mass percentage of the organic polymer is 70% to 99%, so that the organic polymer and inorganic substance act together and each plays an important role to make the binder have better adhesion performance, which further helps to improve the kinetic and safety performance of batteries.

The inorganic substance includes silicon dioxide, where silicon dioxide particle size in the silicon dioxide is 2 nm to 1 μm. The above particle size not only causes no pore blockage but also is conducive to further exerting the effects of the inorganic substance.

In any embodiment, an outer surface of the binder is set to be uneven. In this way, a contact area between the binder and the separator and other components is increased, improving the adhesion effect.

The inorganic substance includes silicon dioxide, where silicon dioxide particle size in the silicon dioxide is 5 nm to 100 nm. The above particle size is conducive to further exerting the effects of the inorganic substance.

In any embodiment, the binder has an ionic conductivity of 0.3 mS $cm^{-1}$ to 0.6 mS $cm^{-1}$. Conductivity is a measure of the ability of a solution to conduct an electric current, expressed in Siemens per meter (S/m). The ionic conductivity of the binder proposed in this application is between 0.3 mS $cm^{-1}$ and 0.6 mS $cm^{-1}$, fully exerting electrical conductivity and adhesion performance of the binder, and further improving the kinetic performance of secondary batteries.

The inorganic substance includes silicon dioxide, where silicon dioxide particle size in the silicon dioxide is 5

nm to 20 nm. The above particle size is conducive to further exerting the effects of the inorganic substance.

According to a second aspect, an embodiment of this application provides a separator including the binder according to the embodiment of the first aspect of this application.

According to a third aspect, an embodiment of this application provides an electrode plate including the binder according to the embodiment of the first aspect of this application.

According to a fourth aspect, an embodiment of this application provides an electrode assembly including at least one of the binder according to the embodiment of the first aspect of this application, the separator according to the embodiment of the second aspect of this application, and the electrode plate according to the embodiment of the third aspect of this application.

According to a fifth aspect, an embodiment of this application provides a battery cell including the electrode assembly according to the embodiment of the fourth aspect of this application.

According to a sixth aspect, an embodiment of this application provides a battery including the battery cell according to the embodiment of the fifth aspect of this application.

According to a seventh aspect, an embodiment of this application provides an electric apparatus including the battery cell according to the embodiment of the fifth aspect of this application or the battery according to the embodiment of the sixth aspect.

## BRIEF DESCRIPTION OF DRAWINGS

To describe the technical solutions in embodiments of the present invention or in the prior art more clearly, the following briefly describes the accompanying drawings required for describing the embodiments or the prior art. Apparently, the accompanying drawings in the following description show merely some of the embodiments of the present invention, and persons of ordinary skill in the art may still derive other related drawings from the accompanying drawings without creative efforts.

FIG. 1 is a schematic diagram of a battery cell according to an embodiment of this application;
FIG. 2 is an exploded view of the battery cell according to the embodiment of this application in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application in FIG. 4;
FIG. 6 is a schematic diagram of an electric apparatus using a secondary battery as a power source according to an embodiment of this application;
FIG. 7 is an SEM diagram of the binder according to Example 1 of this application; and
FIG. 8 is another SEM diagram of the binder according to Example 1 of this application.

Description of reference signs:
1. battery pack; 2. upper box body; 3. lower box body; 4. battery module; 5. secondary battery; 51. housing; 52. electrode assembly; and 53. top cover assembly.

The realization of the objectives, functional characteristics, and advantages of the present invention are further described in conjunction with the embodiments and with reference to the accompanying drawings.

## DESCRIPTION OF EMBODIMENTS

The following specifically discloses embodiments of the binder, separator, electrode plate, electrode assembly, battery cell, battery, and electric apparatus of this application with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it should be understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b,

where both a and b are real numbers. For example, a value range of "0-5" means that all real numbers in the range of "0-5" are listed herein, and "0-5" is just an short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

A secondary battery includes a positive electrode plate, a negative electrode plate, a separator, and an electrolyte inside. Due to requirements of a manufacturing process and for optimization of cell performance, it is necessary to provide sufficient adhesion force between the positive electrode plate, the negative electrode plate, and the separator. This is achieved by applying an adhesive coating substance onto a surface of the separator to form an adhesive separator. In the prior art, the substance applied onto the surface of the separator includes fluorine-containing polymers and non-fluorine-containing polymers.

Applying fluorine-containing polymers onto the separator requires the use of a fluorine-containing polymer. Raw materials for fluorine-containing polymer binders are single-sourced, resources are gradually depleted, costs are increasing, and ozone-depleting substances are used in the manufacturing process, which poses a high environmental risk. Moreover, the melting point of the fluorine-containing polymer used for coating the separator is high, and a hot-pressing temperature of a cell is usually below 100°C, which cannot reach the melting point of the fluorine-containing polymer binder. Therefore, separators using fluorine-containing polymer binders have poor adhesion force to electrode plates during hot-pressing. Fluorine-containing polymer binder materials have high density and require a high coating weight. Non-fluorine-containing polymers used for coating the separator usually use polyester polymers, but existing polyester-type binders have poor adaptability to cell manufacturing processes. For example, small particle size emulsions or suspensions have the problem of pore blocking. Polyester powder with large particle size and high glass transition temperature has the problem of poor hot-pressing and increased internal resistance of the cell.

In other words, the inventors have found in practice that for binders for batteries used in the prior art, some have poor adhesion performance, and some have high melting points, which makes it difficult to fully exert adhesion effect of the binders under battery operation conditions, so that battery components cannot be adhered effectively, resulting in separation or detachment of components during use, deteriorating the kinetic performance of batteries, and causing potential safety hazards.

Surprisingly, after conducting extensive experiments, the inventors have found that an organic polymer obtained by polymerizing, at a specified weight ratio, polymeric monomers containing specified functional groups exhibits good adhesion performance and is suitable for fully exerting the adhesion performance of the organic polymer under battery operation conditions, thereby contributing to improving the kinetic and safety performance of secondary batteries. In addition, when the binder is applied to a separator, it helps to reduce the resistance of the separator and improve the ionic conductivity of the separator, thereby improving the battery performance.

From the perspective of market development, application of traction batteries is being increasingly extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for the traction batteries are also expanding.

Given this, this application provides a binder, a separator, an electrode plate, an electrode assembly, a battery cell, a battery, and an electric apparatus.

According to a first aspect, this application provides a binder including an organic polymer and an inorganic substance. The binder includes a first glass transition temperature and a second glass transition temperature within a

range of -10°C to 95°C, where the first glass transition temperature is higher than the second glass transition temperature.

The above glass transition temperatures, organic polymer, and inorganic substance act together to obtain a binder with good adhesion performance and appropriate glass transition temperatures, suitable for fully exerting the adhesion performance of the binder under battery operation conditions, and thereby improving the kinetic and safety performance of batteries.

The glass transition temperature is a temperature at which a high polymer changes from a high-elastic state to a glassy state, and refers to a temperature at which an amorphous polymer (including the non-crystalline part of a crystalline polymer) changes from a glassy state to a high-elastic state or from the latter to the former. It is the lowest temperature at which macromolecular chain segments of an amorphous polymer are free to move, and is usually expressed as Tg. Above the glass transition temperature, the high polymer exhibits elasticity, and below the glass transition temperature, the high polymer exhibits brittleness. The first glass transition temperature of the binder proposed in this application is 30°C to 75°C, suitable for fully exerting the adhesion performance of the binder under battery operation conditions, and thereby contributing to improving the kinetic and safety performance of secondary batteries.

The glass transition temperature can be measured using a method commonly used in the art, for example, using differential scanning calorimetry in accordance with GB/T 19466.2.

In any embodiment, the first glass transition temperature of the binder is 30°C to 75°C, and the second glass transition temperature of the binder is -10°C to 25°C.

Therefore, in the technical solution of this embodiment of this application, the first glass transition temperature of the binder may be, for example, but is not limited to any point value of 30°C, 35°C, 40°C, 45°C, 50°C, 55°C, 60°C, 65°C, 70°C, and 75°C or in a range between any two values thereof; and the second glass transition temperature of the binder may be, for example, but is not limited to any point value of -10°C, -5°C, 0°C, 5°C, 10°C, 15°C, 20°C, and 25°C or in a range between any two values thereof. Excessively low glass transition temperature of the binder leads to excessively soft texture, and a risk of blocking pores of a separator exists. Excessively high glass transition temperature of the binder leads to difficulties in preparing a separator and increased costs of the separator. The binder in this application has the advantage of having two glass transition temperatures, high and low, greatly reducing the risk of pore blocking by the binder and lowering manufacturing costs of the separator.

When the two glass transition temperatures of the adhesive are within the above ranges, the binder can fully exert its adhesion performance under operation conditions of batteries and provide sufficient adhesion force for battery components, avoiding deterioration of the kinetic performance of batteries and safety issues due to component separation or detachment.

In any embodiment, the inorganic substance is attached to the surface of the organic polymer and/or dispersed inside the organic polymer. Therefore, with the organic polymer as a framework, the inorganic substance can be dispersed both inside and on the surface of the organic polymer, only inside the organic polymer, or only on the surface of the organic polymer, making the binder suitable for fully exerting its adhesion performance under battery operation conditions, thereby improving the kinetic and safety performance of batteries.

In any embodiment, polymeric monomers of the organic polymer include a first monomer, where the first monomer has the following constitutional formula:

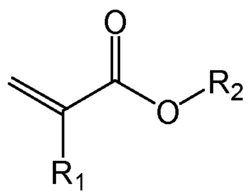

where $R_1$ includes a hydrogen atom, or an alkyl group containing 1 to 6 carbon atoms, $R_2$ includes a substituted or unsubstituted alkyl group containing 1 to 15 carbon atoms or cycloalkyl or isobutenyl group containing 3 to 6 carbon atoms, and in the case of being substituted, a substituent group includes a hydroxyl group or an alkyl group containing 1 to 6 carbon atoms. Therefore, an unsaturated ester group in the first monomer can improve the swelling resistance of the polymer, and contribute to good adhesion performance by acting as a flexible monomer chain segment in a molecular chain segment for regulating the glass transition temperature of the organic polymer and improving the toughness of the binder during application.

In any embodiment, the first monomer includes at least one of methyl acrylate, ethyl acrylate, n-propyl acrylate, n-butyl acrylate, isobutyl acrylate, sec-butyl acrylate, tert-butyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, 2-hydroxypropyl methacrylate, vinyl acetate, trifluoroethyl methacrylate, glycidyl methacrylate, and trimethylolpropane triacrylate.

Experimental results show that using at least one of the above organic substances for polymerization can better regulate the glass transition temperature of the organic polymer, improve the toughness of the binder during application, and help to exert good adhesion performance.

In any embodiment, the first monomer includes at least one of methyl methacrylate, lauryl acrylate, lauryl methacrylate, and trimethylolpropane triacrylate. This further enables the regulation of the glass transition temperature of the organic polymer, improves the toughness of the binder during application, and helps to further exert good adhesion performance.

In any embodiment, the polymeric monomers of the organic polymer further include a second monomer, where the second monomer includes an organic substance containing an unsaturated nitrile group. The organic substance containing an unsaturated nitrile group has a cyano group with strong polarity, helping to increase the ionic conductivity.

In any embodiment, the polymeric monomers of the organic polymer further include a third monomer, where the third monomer includes an organic substance containing an unsaturated amide group regulating the molecular weight.

The polymeric monomers of the organic polymer further include a fourth monomer, where the fourth monomer includes an organic substance containing an unsaturated alkenyl group, further regulating the molecular weight.

In any embodiment, the polymeric monomers of the organic polymer further include a second monomer, where the second monomer has the following constitutional formula:

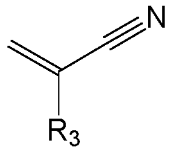

where $R_3$ includes a hydrogen atom, or an alkyl group containing 1 to 6 carbon atoms. The organic substance containing an unsaturated nitrile group has a cyano group with strong polarity, helping to increase the ionic conductivity.

The polymeric monomers of the organic polymer further include a third monomer, where the third monomer has the following constitutional formula:

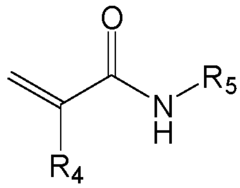

where $R_4$ includes a hydrogen atom, or an alkyl group containing 1 to 6 carbon atoms; $R_5$ includes a hydrogen atom, or a hydroxy group-substituted alkyl group containing 1 to 6 carbon atoms or alkoxy group containing 1 to 6 carbon atoms. The third monomer includes an unsaturated amide group regulating the molecular weight.

The binder in this application includes an organic polymer, where the organic polymer is obtained by polymerizing the first monomer containing the O=C-O group, the second monomer containing the unsaturated nitrile group, and the third monomer containing the unsaturated amide group at a specified weight ratio. This can fully exert the synergistic advantages offered by each monomer, so that the prepared organic polymer has good adhesion performance and two glass transition temperatures, high and low, suitable for fully exerting the adhesion performance of the organic polymer under battery operation conditions and improving the kinetic and safety performance of secondary batteries. The binder in this application also contains the inorganic substance, helping to enhance the flame retardancy of the binder, and thus improving the safety performance of secondary batteries. In addition, when the binder is applied to the separator, it helps to reduce the resistance of the separator and improve the ionic conductivity of the separator, thereby improving the battery performance.

The polymeric monomers of the organic polymer further include a fourth monomer, where the fourth monomer has the following constitutional formula:

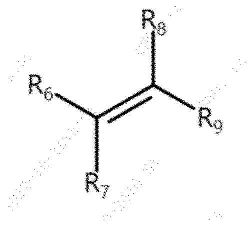

where $R_6$, $R_7$, $R_8$, and $R_9$ each independently includes a hydrogen atom, a substituted or unsubstituted phenyl group, a substituted or unsubstituted cycloalkyl group, or a straight-chain or branched-chain alkyl group. The fourth monomer includes an unsaturated alkenyl group, further regulating the molecular weight.

By adding the fourth monomer, the types of monomers in the organic polymer are further enriched, and the function of the unsaturated alkenyl group in the fourth monomer is exerted, so that the binder polymer containing the fourth monomer has good adhesion performance and a low glass transition temperature, suitable for fully exerting the adhesion performance of the binder polymer under battery operation conditions, and thereby contributing to improving the kinetic and safety performance of secondary batteries. In addition, when the binder is applied to a separator, it helps to reduce the resistance of the separator and improve the ionic conductivity of the separator, thereby improving the battery performance.

In any embodiment, the second monomer includes at least one of acrylonitrile, methacrylonitrile, and ethyl acrylonitrile. Further, the second monomer includes at least one of acrylonitrile and methacrylonitrile. Experimental results show that using at least one of the above organic substances as the second monomer can further increase the ionic conductivity of the binder.

In any embodiment, the third monomer includes an organic substance containing an unsaturated amide group. Specifically, the third monomer includes at least one of acrylamide, N-methylolacrylamide, and N-butoxymethylacrylamide. Further, the third monomer includes at least one of acrylamide and N-methylolacrylamide. Experimental results show that using at least one of the above organic substances as the third monomer can further regulate the molecular weight.

In any embodiment, the fourth monomer includes at least one of ethylene, styrene, butadiene, and isoprene. Experimental results show that using at least one of the above organic substances as the fourth monomer can further regulate the molecular weight.

In any embodiment, the polymeric monomers of the organic polymer further include a second monomer and a third monomer, where the second monomer includes an organic substance containing an unsaturated nitrile group, the third monomer includes an organic substance containing an unsaturated amide group, the fourth monomer includes an organic substance containing an unsaturated alkenyl group, and a weight ratio of the first monomer, the second monomer, and the third monomer is 1:0-0.8:0-0.15.

The organic polymer is obtained by polymerizing the first monomer, the second monomer, and the third monomer, which have different functional groups, in a specified proportion. The obtained organic polymer can fully exert the advantages of each polymeric monomer, so that the binder polymer containing the organic polymer has good adhesion performance and a low glass transition temperature, suitable for fully exerting the adhesion performance of the binder polymer under battery operation conditions, and thereby contributing to improving the kinetic and safety performance of secondary batteries. In addition, when the binder is applied to a separator, it helps to reduce the resistance of the separator and improve the ionic conductivity of the separator, thereby improving the battery performance.

In any embodiment, the weight ratio of the first monomer, the second monomer, and the third monomer is 1:0.05-0.2:0.05-0.1. The above ratio helps to further improve the kinetic and safety performance of secondary batteries.

In any embodiment, the polymeric monomers of the organic polymer further include a second monomer, a third monomer, and a fourth monomer, where the second monomer includes an organic substance containing an unsaturated nitrile group, the third monomer includes an organic substance containing an unsaturated amide group, the fourth monomer includes an organic substance containing an unsaturated alkenyl group, and a weight ratio of the first monomer, the second monomer, the third monomer, and the fourth monomer is 1:0-0.8:0-0.7:0-0.5.

By adding the fourth monomer, the types of monomers in the organic polymer are further enriched, and the function of the unsaturated alkenyl group in the fourth monomer is exerted, so that the binder polymer containing the fourth monomer has good adhesion performance and a low glass transition temperature, suitable for fully exerting the adhesion performance of the binder polymer under battery operation conditions, and thereby contributing to improving the kinetic and safety performance of secondary batteries. In addition, when the binder is applied to a separator, it helps to reduce the resistance of the separator and improve the ionic conductivity of the separator, thereby improving the battery performance.

In any embodiment, the weight ratio of the first monomer, the second monomer, the third monomer, and the

fourth monomer is 1:0.05-0.6:0.05-0.3:0-0.2. The above ratio further reduces the resistance of the separator, and improves the ionic conductivity of the separator and the battery performance.

In any embodiment, particle size of the binder satisfies: 3 μm ≤ D50 ≤ 10 μm. When the particle size of the binder D50 is greater than 10 μm, the particle size is excessively large, which increases a gap between the separator and other components and affects the charge and discharge rate of the battery. Additionally, more internal space of the cell is occupied, affecting the energy density of the cell. When the particle size is excessively small, pores in the separator may be blocked. Therefore, the particle size within the above range is more suitable.

It can be understood that in the embodiments of this application, the corresponding particle size at which the cumulative particle size distribution of the binder particles reaches 50% is Dv50, of which the test method is as follows.

Refer to the standard GB/T 19077-2016/ISO 13320: 2009 particle size distribution laser diffraction method. Use a laser particle size analyzer (Malvern 3000, MasterSizer 3000) to perform the test, with a helium-neon red light source as the main light source. Take a clean small beaker and add 1 g of a sample under test, add a drop of surfactant, add 20 mL of deionized water (to obtain a sample concentration that ensures a shading degree of 8%-12%), and sonicate at 53 KHz/120 W for 5 min to ensure complete dispersion of the sample. Turn on the laser particle size analyzer, clean the optical path system, and perform automatic background test. Stir the sonicated solution under test to ensure its uniform dispersion, place it in the sample pool as required, and start measuring the particle size. The measurement result can be read from the instrument.

The particle size distribution of the binder = (D90 - D10)/D50, where the particle size distribution is less than or equal to 2.5. The particle size distribution represents the uniformity of the binder particles. Larger the particle size distribution indicates more uneven binder particles. If the particle size distribution is greater than 2.5, smaller particles fill in between the larger particles, which renders the smaller particles ineffective, and may cause blocked pores, resulting in waste.

It can be understood that D50 is tested using the above method. In the embodiments of this application, the corresponding particle size at which the cumulative particle size distribution percentage of the binder particles reaches 90% is Dv90, of which the test method is as follows.

Refer to the standard GB/T 19077-2016/ISO 13320: 2009 particle size distribution laser diffraction method. Use a laser particle size analyzer (Malvern 3000, MasterSizer 3000) to perform the test, with a helium-neon red light source as the main light source. Take a clean small beaker and add 1 g of a sample under test, add a drop of surfactant, add 20 mL of deionized water (to obtain a sample concentration that ensures a shading degree of 8%-12%), and sonicate at 53 KHz/120 W for 5 min to ensure complete dispersion of the sample. Turn on the laser particle size analyzer, clean the optical path system, and perform automatic background test. Stir the sonicated solution under test to ensure its uniform dispersion, place it in the sample pool as required, and start measuring the particle size. The measurement result can be read from the instrument.

The particle size of the inorganic substance is 0.0001 μm to 2 μm. The particle size of the inorganic substance being 0.0001 μm to 2 μm enables the inorganic substance to be fully mixed with the organic polymer. In this way, the inorganic substance has low density and excellent thermal and chemical stability, combined with the rich active functional groups on the material surface, which can also improve the electrolyte infiltration of a separator, accelerate ion transmission speed, and enhance the kinetic performance of batteries.

In any embodiment, the particle size distribution of the binder = (D90 - D10)/D50, where the particle size distribution is less than 2; and particle size of the inorganic substance is 0.01 μm to 0.5 μm. With the above particle size limitation, the electrolyte infiltration of the separator can be further improved, the ion transmission speed can be accelerated, and the kinetic performance of batteries can be enhanced.

In any embodiment, the particle size distribution of the binder = (D90 - D10)/D50, where the particle size distribution is less than 1.8; and particle size of the inorganic substance is 0.01 μm to 0.2 μm. Within the above ranges, the binder has good performance in various aspects.

In any embodiment, based on mass of the binder, a mass percentage of the organic polymer is 50% to 99.9%, so that the organic polymer and inorganic substance act together and each plays an important role to make the binder have good adhesion performance, which helps to improve the kinetic and safety performance of batteries.

The inorganic substance includes at least one of an oxide of silicon, an oxide of aluminum, an oxide of calcium, an oxide of zinc, an oxide of magnesium, sodium sulfate, sodium benzoate, calcium carbonate, and modified materials thereof. Using at least one of the inorganic substances, the binder has good adhesion performance, thereby contributing to improving the kinetic and safety performance of batteries.

In any embodiment, based on mass of the binder, a mass percentage of the organic polymer is 60% to 99%; and the inorganic substance includes at least one of fumed silicon dioxide, silicon micro-powder, aluminum oxide, and sodium benzoate. Under the above conditions, the binder has good adhesion performance, further improving the kinetic and safety performance of batteries.

In any embodiment, based on mass of the binder, a mass percentage of the organic polymer is 70% to 99%, so that the organic polymer and inorganic substance act together and each plays an important role to make the binder

have better adhesion performance, which further helps to improve the kinetic and safety performance of batteries.

The inorganic substance includes silicon dioxide, where silicon dioxide particle size in the silicon dioxide is 2 nm to 1 μm. The above particle size not only causes no pore blockage but also is conducive to further exerting the effects of the inorganic substance.

In any embodiment, an outer surface of the binder is set to be uneven. In this way, a contact area between the binder and the separator and other components is increased, improving the adhesion effect.

In any embodiment, the average molecular weight of the organic polymer is 500,000 to 1,200,000, and further 800,000 to 1,000,000. The molecular weight of the organic polymer may be measured using a method commonly used in the art, for example, using gel permeation chromatography in accordance with GB/T 21863-2008.

The inorganic substance includes silicon dioxide, where silicon dioxide particle size in the silicon dioxide is 5 nm to 100 nm. The above particle size is conducive to further exerting the effects of the inorganic substance.

In any embodiment, the binder has an ionic conductivity of 0.3 mS $cm^{-1}$ to 0.6 mS $cm^{-1}$. Conductivity is a measure of the ability of a solution to conduct an electric current. The unit is expressed in Siemens per meter (S/m). The ionic conductivity of the binder proposed in this application is between 0.3 mS $cm^{-1}$ and 0.6 mS $cm^{-1}$, fully exerting electrical conductivity and adhesion performance of the binder, and further improving the kinetic performance of secondary batteries.

The inorganic substance includes silicon dioxide, where silicon dioxide particle size in the silicon dioxide is 5 nm to 20 nm. The above particle size is conducive to further exerting the effects of the inorganic substance.

According to a second aspect, an embodiment of this application provides a separator including the binder according to the embodiment of the first aspect of this application.

When the binder according to the first aspect of this application is applied to the separator, it helps to reduce the resistance of the separator and improve the ionic conductivity of the separator, thereby improving the battery performance.

A substrate of the separator is not limited to any particular type in this application, and may be any well-known porous separator substrate with good chemical stability and mechanical stability.

In some embodiments, the substrate of the separator may be selected from at least one of glass fiber, nonwoven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

The separator described in this application may be prepared using conventional methods for separators in the art. For example, the binder described in the first aspect of this application may be dissolved in an organic solvent to obtain a slurry. The slurry is then applied onto the material of the separator. Subsequently, the organic solvent is removed by drying to obtain the separator as described in this application.

In some embodiments, the binder is applied onto the separator substrate at a density of 0.3-1.0 $g/m^2$, and further 0.3-0.8 $g/m^2$.

According to a third aspect, an embodiment of this application provides an electrode plate including the binder according to the embodiment of the first aspect of this application. It includes the binder according to the embodiment of the first aspect of this application. The electrode plate may be prepared using a method commonly used in the art.

It should be noted that the electrode plate described in this application may be a positive electrode plate or a negative electrode plate.

The positive electrode plate includes a positive electrode current collector and a positive electrode film layer disposed on at least one surface of the positive electrode current collector, where the positive electrode film layer includes the binder according to the first aspect of this application.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, a positive electrode active material may be a well-known positive electrode active material used for batteries in the art. For example, the positive electrode active material may include at least one of the following materials: olivine-structured lithium-containing phosphate, lithium transition metal oxide, and respective modified compounds thereof. However, this application is not limited to these materials, and may alternatively use other conventional well-known materials that can be used as positive electrode active materials for batteries instead. One type of these positive electrode active materials may be used alone, or two or more of them may be used in combination.

Examples of the lithium transition metal oxide may include but are not limited to at least one of lithium cobalt oxide (for example, LiCoOz), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ ($NCM_{333}$ for short), $LiNi_{0.5}Co_{0.3}Mn_{0.2}O_2$ ($NCM_{523}$ for short), $LiNi_{0.5}Co_{0.25}Mn_{0.25}O_2$ ($NCM_{211}$ for short), $LiNi_{0.6}Co_{0.2}Mn_{0.2}O_2$ ($NCM_{622}$ for short), and $LiNi_{0.8}Co_{0.1}Mn_{0.1}O_2$ ($NCM_{811}$ for short)), lithium nickel cobalt aluminum oxide (for example, $LiNi_{0.85}Co_{0.15}Al_{0.05}O_2$), and modified compounds thereof. Examples of the olivine-structured lithium-containing phosphate may include but are not limited to at least one of lithium iron phosphate (for example, $LiFePO_4$ (LFP for short)), a composite material of lithium iron phosphate and carbon, lithium manganese phosphate (for example, $LiMnPO_4$), a composite material of lithium manganese phosphate and carbon, lithium manganese iron phosphate, and a composite material of lithium manganese iron phosphate and carbon.

In some embodiments, the positive electrode plate may be prepared in the following manner: the foregoing constituents used for preparing the positive electrode plate, for example, the positive electrode active material, the conductive agent, the binder according to the first aspect of this application, and any other constituent, are dissolved in a solvent (for example, N-methylpyrrolidone) to form a positive electrode slurry; and the positive electrode slurry is applied onto the positive electrode current collector, followed by processes such as drying and cold pressing to obtain the positive electrode plate.

In some embodiments, the amount of the binder according to the first aspect of this application in the positive electrode plate is 10/0-3 % based on a total weight of the positive electrode film layer.

Similarly, the electrode plate described in this application may also be a negative electrode plate. The negative electrode plate includes a negative electrode current collector and a negative electrode film layer disposed on at least one surface of the negative electrode current collector, where the negative electrode film layer includes the binder according to the first aspect of this application.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material substrate (for example, matrices of polypropylene (PP), polyethylene terephthalate (PET), polybutylene terephthalate (PBT), polystyrene (PS), and polyethylene (PE)).

In some embodiments, a negative electrode active material may be a well-known negative electrode active material used for batteries in the art. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other additives such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder according to the first aspect of this application, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

In some embodiments, optionally, the amount of the binder according to the first aspect of this application in the negative electrode plate is 1%-3% based on a total weight of the negative electrode film layer.

According to a fourth aspect, an embodiment of this application provides an electrode assembly including at least one of the binder according to the embodiment of the first aspect of this application, the separator according to the embodiment of the second aspect of this application, and the electrode plate according to the embodiment of the third aspect of this application. The electrode assembly proposed in this application has all the beneficial effects of the foregoing binder. Details are not described herein again.

According to a fifth aspect, an embodiment of this application provides a battery cell including the electrode assembly according to the embodiment of the fourth aspect of this application.

Generally, the battery cell includes a positive electrode plate, a negative electrode plate, an electrolyte, and a separator. In a charge and discharge process of a battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

The battery cell may be prepared using a method commonly used in the art, for example, the positive electrode plate, the negative electrode plate, and the separator may be made into an electrode assembly through winding or lamination, and then the electrode assembly is injected with the electrolyte and sealed to obtain the battery cell.

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonat, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the liquid electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high- or low-temperature performance of the battery.

In some embodiments, the positive electrode plate, the negative electrode plate, and the separator may be made into the electrode assembly through winding or lamination.

In some embodiments, the battery cell may include an outer package. The outer package may be used for packaging the electrode assembly and the electrolyte.

In some embodiments, the outer package of the battery cell may be a hard shell, for example, a hard plastic shell, an aluminum shell, or a steel shell. The outer package of the battery cell may alternatively be a soft pack, for example, a soft pouch. A material of the soft pack may be plastic. As the plastic, polypropylene, polybutylene terephthalate, polybutylene succinate, and the like may be listed.

The battery cell is not limited to any specific shape in this application, and the battery cell may be cylindrical, rectangular, or of any other shape. For example, FIG. 1 shows a battery cell 5 of a rectangular structure as an example.

In some embodiments, referring to FIG. 2, the outer package may include a housing 51 and a cover plate 53. The housing 51 may include a base plate and a side plate connected onto the base plate, where the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. The battery cell 5 may include one or more electrode assemblies 52, and persons skilled in the art may make choices according to actual requirements.

According to a sixth aspect, an embodiment of this application provides a battery including the battery cell according to the embodiment of the fifth aspect of this application. The battery may be in the form of a battery module or a battery pack, and the battery module may include one or more battery cells. The specific quantity may be chosen by persons skilled in the art according to use and capacity of the battery module.

FIG. 3 shows a battery module 4 as an example. Referring to FIG. 3, in the battery module 4, a plurality of battery cells 5 may be sequentially arranged along a length direction of the battery module 4. Certainly, the battery cells may alternatively be arranged in any other manners. Further, the plurality of battery cells 5 may be fastened by fasteners.

In any embodiment, the battery module 4 may further include a housing with an accommodating space, and the plurality of battery cells 5 are accommodated in the accommodating space.

In some embodiments, the battery module may be further assembled into a battery pack, and the battery pack may include one or more battery modules. The specific quantity may be chosen by persons skilled in the art according

to use and capacity of the battery pack.

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can be engaged with the lower box body 3 to form an enclosed space for accommodating the battery module 4. The plurality of battery modules 4 may be arranged in the battery box in any manner.

According to a seventh aspect, an embodiment of this application provides an electric apparatus including the battery cell according to the embodiment of the fifth aspect of this application or the battery according to the embodiment of the sixth aspect.

The battery cell and the battery may be used as a power source for the electric apparatus, or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 6 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of secondary batteries, a battery pack or a battery module may be used.

In another example, the apparatus may be a mobile phone, a tablet computer, a notebook computer, or the like. Such apparatus is generally required to be light and thin and may use a secondary battery as its power source.

The following further describes the technical solutions of the present invention in detail with reference to specific examples and accompanying drawings. It should be understood that the following examples are only intended to explain the present invention and are not intended to limit the present invention.

Related parameters of the binders in Examples 1 to 25 and Comparative Examples 1 to 4 are shown in the following Table 1. Parameters of silicon dioxide in Examples 21 to 25 are shown in Table 2.

Table 1 Parameters in Examples 1 to 25 and Comparative Examples 1 to 4

| No. | Organic polymer | Inorganic substance | | Particle size distribution | Percentage of organic polymeric monomer | | | | Weight ratio of monomer | Glass transition temperature (°C) | | Ionic conductivity/( mS $cm^{-1}$) |
|---|---|---|---|---|---|---|---|---|---|---|---|---|
| | Component percentage (%) | Inorganic substance | Component percentage (%) | | First monomer | Second monom er | Third monom er | Fourth monome r | | First | Secon d | |
| Example 1 | 50 | Silicon dioxide | 50 | 1.76 | 100 | 0 | 0 | 0 | 1:0:0:0 | 35 | -10 | 0.35 |
| Example 2 | 70 | Aluminu m oxide | 30 | 1.89 | 75 | 15 | 10 | 0 | 1:0.2:0.13:0 | 50 | -10 | 0.35 |
| Example 3 | 80 | Aluminu m oxide | 20 | 1.78 | 65 | 20 | 15 | 0 | 1:0.31:0.23:0 | 35 | -5 | 0.42 |
| Example 4 | 95 | Silicon dioxide | 5 | 1.56 | 90 | 10 | 0 | 0 | 1:0.11:0:0 | 45 | 0 | 0.42 |
| Example 5 | 90 | Sodium sulfate | 10 | 1.96 | 90 | 10 | 0 | 0 | 1:0.11:0:0 | 35 | 0 | 0.44 |
| Example 6 | 90 | Silicon dioxide | 10 | 1.89 | 70 | 30 | 0 | 0 | 1:0.43:0:0 | 40 | 10 | 0.46 |
| Example 7 | 90 | Silicon dioxide | 10 | 1.83 | 90 | 5 | 5 | 0 | 1:0.06:0.06:0 | 35 | 25 | 0.51 |
| Example 8 | 99 | Silicon dioxide | 1 | 2.13 | 90 | 5 | 5 | 0 | 1:0.06:0.06:0 | 35 | 15 | 0.52 |
| Example 9 | 90 | Aluminu m oxide | 10 | 1.85 | 85 | 10 | 5 | 0 | 1:0.12:0.06:0 | 75 | 23 | 0.48 |
| Example 10 | 99.9 | Sodium benzoate | 0.1 | 1.24 | 60 | 0 | 40 | 0 | 1:0:0.67:0 | 35 | 14 | 0.44 |
| Example 11 | 95 | Silicon dioxide | 5 | 1.71 | 80 | 5 | 0 | 15 | 1:0.06:0:0.19 | 50 | 14 | 0.43 |
| Example 12 | 95 | Silicon dioxide | 5 | 1.64 | 70 | 10 | 0 | 20 | 1:0.14:0:0.29 | 35 | 20 | 0.45 |
| Example 13 | 80 | Aluminu m oxide | 20 | 1.78 | 65 | 20 | 15 | 0 | 1:0.31:0.23:0 | 35 | -5 | 0.42 |

(continued)

| No. | Organic polymer | Inorganic substance | | Particle size distribution | Percentage of organic polymeric monomer | | | | Weight ratio of monomer | Glass transition temperature (°C) | | Ionic conductivity/( mS $cm^{-1}$) |
|---|---|---|---|---|---|---|---|---|---|---|---|---|
| | Component percentage (%) | Inorganic substance | Component percentage (%) | | First monomer | Second monom er | Third mon-om er | Fourth mon-ome r | | First | Secon d | |
| Example 14 | 80 | Aluminu m oxide | 20 | 1.78 | 65 | 20 | 15 | 0 | 1:0.31:0.23:0 | 35 | -5 | 0.42 |
| Example 15 | 80 | Aluminu m oxide | 20 | 1.78 | 75 | 15 | 10 | 0 | 1:0.31:0.23:0 | 50 | -10 | 0.42 |
| Example 16 | 80 | Aluminu m oxide | 20 | 1.78 | 35.7 | 28.6 | 17.9 | 17.8 | 1:0.8:0.5:0.5 | 65 | 15 | 0.43 |
| Example 17 | 80 | Aluminu m oxide | 20 | 1.78 | 47.6 | 28.6 | 14.3 | 9.5 | 1:0.6:0.3:0.2 | 40 | 15 | 0.44 |
| Example 18 | 80 | Aluminu m oxide | 20 | 2.46 | 65 | 20 | 15 | 0 | 1:0.31:0.23:0 | 35 | -5 | 0.42 |
| Example 19 | 60 | Aluminu m oxide | 20 | 1.78 | 65 | 20 | 15 | 0 | 1:0.31:0.23:0 | 35 | -5 | 0.37 |
| Example 20 | 80 | Silicon dioxide | 20 | 1.78 | 65 | 20 | 15 | 0 | 1:0.31:0.23:0 | 35 | -5 | 0.48 |
| Example 21 | 80 | Silicon dioxide | 20 | 1.78 | 65 | 20 | 15 | 0 | 1:0.31:0.23:0 | 35 | -5 | 0.43 |
| Example 22 | 80 | Silicon dioxide | 20 | 1.78 | 65 | 20 | 15 | 0 | 1:0.31:0.23:0 | 35 | -5 | 0.47 |
| Example 23 | 80 | Silicon dioxide | 20 | 1.78 | 65 | 20 | 15 | 0 | 1:0.31:0.23:0 | 35 | -5 | 0.48 |
| Example 24 | 80 | Silicon dioxide | 20 | 1.78 | 65 | 20 | 15 | 0 | 1:0.31:0.23:0 | 35 | -5 | 0.46 |
| Example 25 | 80 | Silicon dioxide | 20 | 1.78 | 65 | 20 | 15 | 0 | 1:0.31:0.23:0 | 35 | -5 | 0.46 |
| Comparati ve Example 1 | 50 | Silicon dioxide | 50 | 1.76 | 100 | 0 | 0 | 0 | 1:0:0:0 | 80 | - | 0.35 |

(continued)

| No. | Organic polymer | Inorganic substance | | Particle size distribution | Percentage of organic polymeric monomer | | | | Weight ratio of monomer | Glass transition temperature (°C) | | Ionic conductivity/( mS cm$^{-1}$) |
|---|---|---|---|---|---|---|---|---|---|---|---|---|
| | Component percentage (%) | Inorganic substance | Component percentage (%) | | First monomer | Second monom er | Third mon-om er | Fourth mon-ome r | | First | Secon d | |
| Comparati ve Example 2 | 50 | Silicon dioxide | 50 | 1.76 | 100 | 0 | 0 | 0 | 1:0:0:0 | 25 | - | 0.35 |
| Comparati ve Example 3 | 50 | Silicon dioxide | 50 | 1.76 | 100 | 0 | 0 | 0 | 1:0:0:0 | - | -20 | 0.35 |
| Comparati ve Example 4 | 50 | Silicon dioxide | 50 | 1.76 | 100 | 0 | 0 | 0 | 1:0:0:0 | - | -25 | 0.35 |

**Table 2 Parameters of silicon dioxide in Examples 21 to 25**

| Silicon dioxide | Example 20 | Example 21 | Example 22 | Example 23 | Example 24 | Example 25 |
|---|---|---|---|---|---|---|
| Particle size | 2 nm | 1 μm | 5 nm | 100 nm | 100 nm | 100 nm |

**Example 1**

[Preparation of polymer component 1]

The required monomers were stirred and well mixed according to the weight percentages of 45wt% 2-hydroxyethyl acrylate, 40wt% n-butyl acrylate, 8wt% methyl methacrylate, 2wt% acrylic acid, and 5wt% trimethylolpropane triacrylate. 1000 g of the mixed monomers, 30 g of an emulsifier sodium dodecyl sulfate, 10 g of an initiator ammonium persulfate, and 1200 g of deionized water were added into a 5000 mL four-necked flask equipped with a mechanical stirrer, a thermometer, and a condenser. The mixture was then stirred at high speed for 30 min to be emulsified. Under nitrogen protection, the mixture was heated to 75°C for reaction for 4 h. The pH was adjusted to 6-8. Then the mixture was cooled to below 40°C before discharged. Polymer 1 was obtained.

[Preparation of separator binder 1]

1 kg of polymer 1 was taken and mixed with 450 g of silicon dioxide and 1 kg of deionized water. After stirred for 1 h, the mixture was spray-dried to obtain binder powder. The powder was then ground to obtain separator binder 1.

[Preparation of separator 1]

Separator binder 1 was dispersed in water according to a formulation to obtain a slurry. The slurry was then applied onto a material of separator. Subsequently, water was removed by drying to obtain a separator as described in this application.

**Example 2**

[Preparation of polymer component 2]

The required monomers were stirred and well mixed according to the weight percentages of 65wt% butyl methacrylate, 5wt% trimethylolpropane triacrylate, 15wt% acrylonitrile, 2wt% acrylic acid, 3wt% 2-hydroxyethyl acrylate, and 10wt% acrylamide. 1000 g of the mixed monomers, 30 g of an emulsifier sodium dodecyl sulfate, 10 g of an initiator ammonium persulfate, and 1200 g of deionized water were added into a 5000 mL four-necked flask equipped with a mechanical stirrer, a thermometer, and a condenser. The mixture was then stirred at high speed for 30 min to be emulsified. Under nitrogen protection, the mixture was heated to 75°C for reaction for 4 h. The pH was adjusted to 6-8. Then the mixture was cooled to below 40°C before discharged. Polymer 2 was obtained.

[Preparation of separator binder 2]

1 kg of polymer 2 was taken and mixed with 193 g of aluminum oxide and 1 kg of deionized water. After stirred for 1 h, the mixture was spray-dried to obtain binder powder. The powder was then ground to obtain separator binder 2.

[Preparation of separator 2]

Separator binder 2 was dispersed in water according to a formulation to obtain a slurry. The slurry was then applied onto a material of separator. Subsequently, water was removed by drying to obtain a separator as described in this application.

**Example 3**

[Preparation of polymer component 3]

The required monomers were stirred and well mixed according to the weight percentages of 55wt% lauryl

methacrylate, 2wt% acrylic acid, 3wt% 2-hydroxyethyl acrylate, 5wt% trimethylolpropane triacrylate, 20wt% acrylonitrile, and 15wt% acrylamide. 1000 g of the mixed monomers, 30 g of an emulsifier sodium dodecyl sulfate, 10 g of an initiator ammonium persulfate, and 1200 g of deionized water were added into a 5000 mL four-necked flask equipped with a mechanical stirrer, a thermometer, and a condenser. The mixture was then stirred at high speed for 30 min to be emulsified. Under nitrogen protection, the mixture was heated to 75°C for reaction for 4 h. The pH was adjusted to 6-8. Then the mixture was cooled to below 40°C before discharged. Polymer 3 was obtained.

[Preparation of separator binder 3]

1 kg of polymer 3 material prepared in Example 3 was taken and mixed with 112 g of aluminum oxide and 1 kg of deionized water. After stirred for 1 h, the mixture was spray-dried to obtain binder powder. The powder was then ground to obtain separator binder 3.

[Preparation of separator 3]

Separator binder 3 was dispersed in water according to a formulation to obtain a slurry. The slurry was then applied onto a material of separator. Subsequently, water was removed by drying to obtain a separator as described in this application.

**Example 4**

[Preparation of polymer component 4]

The required monomers were stirred and well mixed according to the weight percentages of 40wt% methyl methacrylate, 40wt% lauryl methacrylate, 3wt% acrylic acid, 2wt% 2-hydroxyethyl acrylate, 5wt% trimethylolpropane triacrylate, and 10wt% acrylonitrile. 1000 g of the mixed monomers, 30 g of an emulsifier sodium dodecyl sulfate, 10 g of an initiator ammonium persulfate, and 1200 g of deionized water were added into a 5000 mL four-necked flask equipped with a mechanical stirrer, a thermometer, and a condenser. The mixture was then stirred at high speed for 30 min to be emulsified. Under nitrogen protection, the mixture was heated to 75°C for reaction for 4 h. The pH was adjusted to 6-8. Then the mixture was cooled to below 40°C before discharged. Polymer 4 was obtained.

[Preparation of separator binder 4]

1 kg of polymer 4 was taken and mixed with 24 g of nano silicon dioxide and 1 kg of deionized water. After stirred for 1 h, the mixture was spray-dried to obtain binder powder. The powder was then ground to obtain separator binder 4.

[Preparation of separator 4]

Separator binder 4 was dispersed in water according to a formulation to obtain a slurry. The slurry was then applied onto a material of separator. Subsequently, water was removed by drying to obtain a separator as described in this application.

**Example 5**

[Preparation of polymer component 5]

The required monomers were stirred and well mixed according to the weight percentages of 40wt% methyl methacrylate, 40wt% lauryl methacrylate, 3wt% acrylic acid, 2wt% 2-hydroxyethyl acrylate, 5wt% trimethylolpropane triacrylate, and 10wt% acrylonitrile. 1000 g of the mixed monomers, 30 g of an emulsifier sodium dodecyl sulfate, 10 g of an initiator ammonium persulfate, and 1200 g of deionized water were added into a 5000 mL four-necked flask equipped with a mechanical stirrer, a thermometer, and a condenser. The mixture was then stirred at high speed for 30 min to be emulsified. Under nitrogen protection, the mixture was heated to 75°C for reaction for 4 h. The pH was adjusted to 6-8. Then the mixture was cooled to below 40°C before discharged. Polymer 5 was obtained.

[Preparation of separator binder 5]

1 kg of polymer 5 was taken and mixed with 50 g of sodium sulfate and 1 kg of deionized water. After stirred

for 1 h, the mixture was spray-dried to obtain binder powder. The powder was then ground to obtain separator binder 5.

[Preparation of separator 5]

Separator binder 5 was dispersed in water according to a formulation to obtain a slurry. The slurry was then applied onto a material of separator. Subsequently, water was removed by drying to obtain a separator as described in this application.

Example 6

[Preparation of polymer component 6]

The required monomers were stirred and well mixed according to the weight percentages of 25wt% lauryl methacrylate, 35wt% lauryl acrylate, 2wt% acrylic acid, 3wt% 2-hydroxypropyl acrylate, 5wt% trimethylolpropane triacrylate, and 30wt% acrylonitrile. 1000 g of the mixed monomers, 30 g of an emulsifier sodium dodecyl sulfate, 10 g of an initiator ammonium persulfate, and 1200 g of deionized water were added into a 5000 mL four-necked flask equipped with a mechanical stirrer, a thermometer, and a condenser. The mixture was then stirred at high speed for 30 min to be emulsified. Under nitrogen protection, the mixture was heated to 75°C for reaction for 4 h. The pH was adjusted to 6-8. Then the mixture was cooled to below 40°C before discharged. Polymer 6 was obtained.

[Preparation of separator binder 6]

1 kg of polymer 6 was taken and mixed with 50g of nano silicon dioxide and 1 kg of deionized water. After stirred for 1 h, the mixture was spray-dried to obtain binder powder. The powder was then ground to obtain separator binder 6.

[Preparation of separator 6]

Separator binder 6 was dispersed in water according to a formulation to obtain a slurry. The slurry was then applied onto a material of separator. Subsequently, water was removed by drying to obtain a separator as described in this application.

**Example 7**

[Preparation of polymer component 7]

The required monomers were stirred and well mixed according to the weight percentages of 10wt% n-butyl acrylate, 55wt% lauryl acrylate, 10wt% methyl methacrylate, 2wt% acrylic acid, 3wt% 2-hydroxypropyl acrylate, 5wt% trimethylolpropane triacrylate, 5wt% acrylonitrile, and 5wt% acrylamide. 1000 g of the mixed monomers, 30 g of an emulsifier sodium dodecyl sulfate, 10 g of an initiator ammonium persulfate, and 1200 g of deionized water were added into a 5000 mL four-necked flask equipped with a mechanical stirrer, a thermometer, and a condenser. The mixture was then stirred at high speed for 30 min to be emulsified. Under nitrogen protection, the mixture was heated to 75°C for reaction for 4 h. The pH was adjusted to 6-8. Then the mixture was cooled to below 40°C before discharged. Polymer 7 was obtained.

[Preparation of separator binder 7]

1 kg of polymer 7 was taken and mixed with 50g of nano silicon dioxide and 1 kg of deionized water. After stirred for 1 h, the mixture was spray-dried to obtain binder powder. The powder was then ground to obtain separator binder 7.

[Preparation of separator 7]

Separator binder 7 was dispersed in water according to a formulation to obtain a slurry. The slurry was then applied onto a material of separator. Subsequently, water was removed by drying to obtain a separator as described in this application.

**Example 8**

[Preparation of polymer component 8]

The required monomers were stirred and well mixed according to the weight percentages of 10wt% n-butyl acrylate, 55wt% lauryl acrylate, 10wt% methyl methacrylate, 2wt% acrylic acid, 3wt% 2-hydroxypropyl acrylate, 5wt% trimethylolpropane triacrylate, 5wt% acrylonitrile, and 5wt% acrylamide. 1000 g of the mixed monomers, 30 g of an emulsifier sodium dodecyl sulfate, 10 g of an initiator ammonium persulfate, and 1200 g of deionized water were added into a 5000 mL four-necked flask equipped with a mechanical stirrer, a thermometer, and a condenser. The mixture was then stirred at high speed for 30 min to be emulsified. Under nitrogen protection, the mixture was heated to 75°C for reaction for 4 h. The pH was adjusted to 6-8. Then the mixture was cooled to below 40°C before discharged. Polymer 8 was obtained.

[Preparation of separator binder 8]

1 kg of polymer 8 was taken and mixed with 4.5g of nano silicon dioxide and 1 kg of deionized water. After stirred for 1 h, the mixture was spray-dried to obtain binder powder. The powder was then ground to obtain separator binder 8.

[Preparation of separator 8]

Separator binder 8 was dispersed in water according to a formulation to obtain a slurry. The slurry was then applied onto a material of separator. Subsequently, water was removed by drying to obtain a separator as described in this application.

**Example 9**

[Preparation of polymer component 9]

The required monomers were stirred and well mixed according to the weight percentages of 65wt% lauryl acrylate, 10wt% methyl methacrylate, 2wt% acrylic acid, 3wt% 2-hydroxypropyl acrylate, 5wt% trimethylolpropane triacrylate, 10wt% acrylonitrile, and 5wt% acrylamide. 1000 g of the mixed monomers, 30 g of an emulsifier sodium dodecyl sulfate, 10 g of an initiator ammonium persulfate, and 1200 g of deionized water were added into a 5000 mL four-necked flask equipped with a mechanical stirrer, a thermometer, and a condenser. The mixture was then stirred at high speed for 30 min to be emulsified. Under nitrogen protection, the mixture was heated to 75°C for reaction for 4 h. The pH was adjusted to 6-8. Then the mixture was cooled to below 40°C before discharged. Polymer 9 was obtained.

[Preparation of separator binder 9]

1 kg of polymer 9 was taken and mixed with 50g of aluminum oxide and 1 kg of deionized water. After stirred for 1 h, the mixture was spray-dried to obtain binder powder. The powder was then ground to obtain separator binder 9.

[Preparation of separator 9]

Separator binder 9 was dispersed in water according to a formulation to obtain a slurry. The slurry was then applied onto a material of separator. Subsequently, water was removed by drying to obtain a separator as described in this application.

**Example 10**

[Preparation of polymer component 10]

The required monomers were stirred and well mixed according to the weight percentages of 30wt% lauryl acrylate, 20wt% butyl acrylate, 2wt% acrylic acid, 3wt% 2-hydroxyethyl acrylate, 5wt% trimethylolpropane triacrylate, and 40wt% acrylamide. 1000 g of the mixed monomers, 30 g of an emulsifier sodium dodecyl sulfate, 10 g of an initiator ammonium persulfate, and 1200 g of deionized water were added into a 5000 mL four-necked flask equipped with a mechanical stirrer, a thermometer, and a condenser. The mixture was then stirred at high speed for 30 min to be emulsified. Under nitrogen protection, the mixture was heated to 75°C for reaction for 4 h. The pH was adjusted to 6-8.

Then the mixture was cooled to below 40°C before discharged. Polymer 10 was obtained.

[Preparation of separator binder 10]

1 kg of polymer 10 was taken and mixed with 0.45 g of sodium benzoate and 1 kg of deionized water. After stirred for 1 h, the mixture was spray-dried to obtain binder powder. The powder was then ground to obtain separator binder 10.

[Preparation of separator 10]

Separator binder 10 was dispersed in water according to a formulation to obtain a slurry. The slurry was then applied onto a material of separator. Subsequently, water was removed by drying to obtain a separator as described in this application.

**Example 11**

[Preparation of polymer component 11]

The required monomers were stirred and well mixed according to the weight percentages of 20wt% methyl methacrylate, 50wt% n-butyl acrylate, 2wt% acrylic acid, 3wt% hydroxyethyl acrylate, 5wt% trimethylolpropane triacrylate, 5wt% acrylonitrile, and 15wt% styrene. 1000 g of the mixed monomers, 30 g of an emulsifier sodium dodecyl sulfate, 10 g of an initiator ammonium persulfate, and 1200 g of deionized water were added into a 5000 mL four-necked flask equipped with a mechanical stirrer, a thermometer, and a condenser. The mixture was then stirred at high speed for 30 min to be emulsified. Under nitrogen protection, the mixture was heated to 75°C for reaction for 4 h. The pH was adjusted to 6-8. Then the mixture was cooled to below 40°C before discharged. Polymer 11 was obtained.

[Preparation of separator binder 11]

1 kg of polymer 11 was taken and mixed with 24 g of silicon dioxide and 1 kg of deionized water. After stirred for 1 h, the mixture was spray-dried to obtain binder powder. The powder was then ground to obtain separator binder 11.

[Preparation of separator 11]

Separator binder 11 was dispersed in water according to a formulation to obtain a slurry. The slurry was then applied onto a material of separator. Subsequently, water was removed by drying to obtain a separator as described in this application.

**Example 12**

[Preparation of polymer component 12]

10 g of sodium dodecyl sulfate, 1200 g of deionized water, 10 g of cumene hydroperoxide, 15 g of rongalite, 0.05 g of ferrous sulfate, and 2 g of EDTA disodium salt were mixed with a monomer mixture according to the weight percentage of 20wt% methyl methacrylate, 40wt% n-butyl acrylate, 2wt% acrylic acid, 3wt% hydroxyethyl acrylate, 5wt% trimethylolpropane triacrylate, 10wt% acrylonitrile, and 10wt% styrene. The obtained mixture was transferred into a high-pressure reactor and nitrogen replacement is performed 3 times. Subsequently, 10wt% butadiene was added, and the mixture was stirred at high speed for 30 min at 25°C to be emulsified. The temperature was then raised to 65°C, and the reaction was carried out at 0.2 Mpa for 6 h. The pH was adjusted to 6-8. Then the mixture was cooled to below 40°C before discharged. Polymer 12 was obtained.

[Preparation of separator binder 12]

1 kg of polymer 12 was taken and mixed with 24 g of silicon dioxide and 1 kg of deionized water. After stirred for 1 h, the mixture was spray-dried to obtain binder powder. The powder was then ground to obtain separator binder 12.

[Preparation of separator 12]

Separator binder 12 was dispersed in water according to a formulation to obtain a slurry. The slurry was then

applied onto a material of separator. Subsequently, water was removed by drying to obtain a separator as described in this application.

The preparation of the polymers, binders, and separators in Examples 13 to 25 was the same as in Example 3, with the difference lying in the parameters specified in Table 1.

The preparation of the polymers, binders, and separators in Comparative Examples 1 to 4 was the same as in Example 1, with the difference lying in the parameters specified in Table 1.

The following tests were conducted on the separators in Examples 1 to 25 and Comparative Examples 1 to 4:

1. Scanning electron microscopy analysis was performed on the binder obtained in Example 1 to obtain FIG. 7 and FIG. 8. Referring to FIG. 7, it can be seen that an entire binder particle is in a spherical shape. It can be seen from the enlarged view (FIG. 8) that the binder particle uses the organic polymer as the framework, with a rough and uneven surface, and the surface is attached with sesame-like small particles, which is the inorganic substance.
2. Ionic conductivity test: The separator was cut into 40 mm × 20 mm specimens and stacked in groups, each group containing 4 layers. The separator was fully infiltrated with a commercialized electrolyte and assembled into a symmetrical battery for test in a glove box. The impedance of the separator was measured using an electrochemical workstation. The measurement range was from 1 Hz to 100,000 Hz, and the applied AC signal polarization was 5 mV. The ionic conductivity could be calculated based on the results of the AC impedance test using the following formula:

$$\delta = 1000L/RA,$$

where $\delta$ represents the ionic conductivity in mS/cm; A represents the area of the tested separator in $cm^2$; L represents the thickness of the tested separator; and R represents the resistance of the tested separator. The results are shown in Table 1.
3. Particle size test:

Refer to the standard GB/T 19077-2016/ISO 13320: 2009 particle size distribution laser diffraction method. A laser particle size analyzer (Malvern 3000, MasterSizer 3000) was used to perform the test, with a helium-neon red light source as the main light source. Take a clean small beaker and add 1 g of a sample under test, add a drop of surfactant, add 20 mL of deionized water (to obtain a sample concentration that ensures a shading degree of 8%-12%), and sonicate at 53 KHz/120 W for 5 min to ensure complete dispersion of the sample. The laser particle size analyzer was turned on, the optical path system was cleaned, and automatic background test was performed. Stir the sonicated solution under test to ensure its uniform dispersion, place it in the sample pool as required, and start measuring the particle size. The measurement result can be read from the instrument. The particle size distribution was obtained by calculation according to particle size tests, with the results shown in Table 1.

4. Glass transition temperature test (DSC method)

The standard: GB/T 19466.2 Differential scanning calorimetry (DSC) - determination of glass transition temperature was used as reference.

Test conditions:

(1) Sample preparation: 6 ± 0.05 mg of the sample was weighed and placed in an Al crucible. After the sample was shaken leveled, the crucible was covered with a lid and placed in the measuring instrument.
(2) Parameter setting: Under a nitrogen atmosphere, the rate of the purge gas was set to 50 mL/min, while the rate of the protective gas was set to 100 mL/min.
(3) Heating conditions: Heating rate was 10°C/min within a temperature range of -40°C to 200°C.

5. The negative electrode plate, positive electrode plate, electrolyte, and separator mentioned above were assembled into a button battery and the cycling capacity retention rate was tested using the following method.

Lithium-ion batteries from the examples and comparative examples were taken and ensure that each example has at least 2 parallel samples. The batteries were placed in a constant temperature of 25°C for 1 hour. Then, the batteries were constant-current charged to 3.65 V at a 2C charge rate, constant-voltage charged until the charging

current dropped below 0.05C, left standing for 5 minutes, constant-current discharged to 2.5 V at a 1C discharge rate, and then left standing for 5 minutes. The above process was repeated for a specific number of cycles (in this case, 1000 cycles). The capacity retention rate was calculated as follows: The capacity retention rate of the n-th cycle = discharge capacity of the n-th cycle/discharge capacity of the second cycle * 100%.

The test results are shown in Table 3 below.

**Table 3 Performance test of lithium-ion batteries in Examples 1 to 25 and Comparative Examples 1 to 4**

| No. | Cycling capacity retention rate (%) |
|---|---|
| Example 1 | 80% |
| Example 2 | 81% |
| Example 3 | 81% |
| Example 4 | 83% |
| Example 5 | 80% |
| Example 6 | 81% |
| Example 7 | 95% |
| Example 8 | 95% |
| Example 9 | 93% |
| Example 10 | 88% |
| Example 11 | 87% |
| Example 12 | 88% |
| Example 13 | 83% |
| Example 14 | 83% |
| Example 15 | 80% |
| Example 16 | 88% |
| Example 17 | 85% |
| Example 18 | 85% |
| Example 19 | 81% |
| Example 20 | 88% |
| Example 21 | 85% |
| Example 22 | 86% |
| Example 23 | 88% |
| Example 24 | 88% |
| Example 25 | 87% |
| Comparative Example 1 | 75% |
| Comparative Example 2 | 71% |
| Comparative Example 3 | 70% |
| Comparative Example 4 | 65% |

As can be seen from Examples 1 to 25 in Table 3, which shows a comparison between the examples and the comparative examples, the binder has a first glass transition temperature and a second glass transition temperature in the range of -10°C to 95°C, with the first glass transition temperature being greater than the second glass transition temperature. The organic polymer and the inorganic substance act together to obtain the binder with good adhesion performance and appropriate glass transition temperatures, suitable for fully exerting the adhesion performance of the binder under battery operation conditions, and thereby improving the kinetic and safety performance of batteries and

further improving cycling capacity retention rate of the batteries.

The glass transition temperatures in Comparative Examples 1 to 4 are not within the ranges of the first glass transition temperature and second glass transition temperature, resulting significant decrease in the cycling performance of the batteries. It can be seen that the use of both the organic and inorganic substances as well as the first glass transition temperature and second glass transition temperature are crucial.

In summary, for the binder proposed in this application, the organic polymer and the inorganic substance act together to obtained the binder with good adhesion performance and appropriate glass transition temperatures, suitable for fully exerting the adhesion performance of the binder under battery operation conditions, and thereby improving the kinetic and safety performance of batteries.

The foregoing descriptions are merely preferred embodiments of the present invention, and are not intended to limit the patent scope of the present invention. Persons skilled in the art understand that the present invention may have various modifications and variations. Any modification, equivalent replacement, or improvement made without departing from the spirit and principle of the present invention shall fall within the patent protection scope of the present invention.

## Claims

1. A binder, **characterized by** comprising an organic polymer and an inorganic substance, wherein the binder has a first glass transition temperature and a second glass transition temperature within a range of -10°C to 95°C, the first glass transition temperature being higher than the second glass transition temperature.

2. The binder according to claim 1, **characterized in that** the first glass transition temperature of the binder is 30°C to 75°C; and/or

   the second glass transition temperature of the binder is -10°C to 25°C; and/or
   the inorganic substance is attached to a surface of the organic polymer and/or dispersed inside the organic polymer.

3. The binder according to claim 1 or 2, **characterized in that** polymeric monomers of the organic polymer comprise a first monomer, wherein the first monomer has the following constitutional formula:

   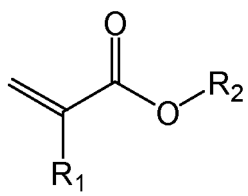

   wherein $R_1$ comprises a hydrogen atom, or an alkyl group containing 1 to 6 carbon atoms, $R_2$ comprises a substituted or unsubstituted alkyl group containing 1 to 15 carbon atoms or cycloalkyl or isobutenyl group containing 3 to 6 carbon atoms, and in the case of being substituted, a substituent group comprises a hydroxyl group or an alkyl group containing 1 to 6 carbon atoms.

4. The binder according to claim 3, **characterized in that** the first monomer comprises at least one of methyl acrylate, ethyl acrylate, n-propyl acrylate, n-butyl acrylate, isobutyl acrylate, sec-butyl acrylate, tert-butyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, 2-hydroxypropyl methacrylate, vinyl acetate, trifluoroethyl methacrylate, glycidyl methacrylate, and trimethylolpropane triacrylate.

5. The binder according to claim 3 or 4, **characterized in that** the first monomer comprises at least one of methyl methacrylate, lauryl acrylate, lauryl methacrylate, and trimethylolpropane triacrylate.

6. The binder according to any one of claims 3 to 5, **characterized in that** the polymeric monomers of the organic polymer further comprise a second monomer, wherein the second monomer comprises an organic substance containing an unsaturated nitrile group; and/or

the polymeric monomers of the organic polymer further comprise a third monomer, wherein the third monomer comprises an organic substance containing an unsaturated amide group; and/or the polymeric monomers of the organic polymer further comprise a fourth monomer, wherein the fourth monomer comprises an organic substance containing an unsaturated alkenyl group.

7. The binder according to any one of claims 3 to 6, **characterized in that** the polymeric monomers of the organic polymer further comprise a second monomer, wherein the second monomer has the following constitutional formula:

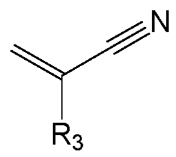

wherein $R_3$ comprises a hydrogen atom, or an alkyl group containing 1 to 6 carbon atoms; and/or the polymeric monomers of the organic polymer further comprise a third monomer, wherein the third monomer has the following constitutional formula:

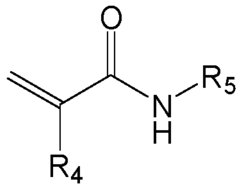

wherein $R_4$ comprises a hydrogen atom, or an alkyl group containing 1 to 6 carbon atoms, and $R_5$ comprises a hydrogen atom, or a hydroxy group-substituted alkyl group containing 1 to 6 carbon atoms or alkoxy group containing 1 to 6 carbon atoms; and/or

the polymeric monomers of the organic polymer further comprise a fourth monomer, wherein the fourth monomer has the following constitutional formula:

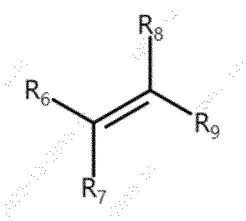

wherein $R_6$, $R_7$, $R_8$, and $R_9$ each independently comprises a hydrogen atom, a substituted or unsubstituted phenyl group, a substituted or unsubstituted cycloalkyl group, or a straight-chain or branched-chain alkyl group.

8. The binder according to any one of claims 3 to 6, **characterized in that** the polymeric monomers of the organic polymer further comprise a second monomer, wherein the second monomer comprises at least one of acrylonitrile, methacrylonitrile, and ethyl acrylonitrile; and/or

the polymeric monomers of the organic polymer further comprise a third monomer, wherein the third monomer comprises at least one of acrylamide, N-methylolacrylamide, and N-butoxymethylacrylamide; and/or

the polymeric monomers of the organic polymer further comprise a fourth monomer, wherein the fourth monomer comprises at least one of ethylene, styrene, butadiene, and isoprene.

9. The binder according to any one of claims 3 to 6, **characterized in that** the polymeric monomers of the organic polymer further comprise a second monomer, wherein the second monomer comprises at least one of acrylonitrile and methacrylonitrile; and/or

the polymeric monomers of the organic polymer further comprise a third monomer, wherein the third monomer comprises at least one of acrylamide and N-methylolacrylamide.

**10.** The binder according to any one of claims 3 to 6, **characterized in that** the polymeric monomers of the organic polymer further comprise a second monomer and a third monomer, wherein the second monomer comprises an organic substance containing an unsaturated nitrile group, the third monomer comprises an organic substance containing an unsaturated amide group, and a weight ratio of the first monomer, the second monomer, and the third monomer is 1:0-0.8:0-0.15.

**11.** The binder according to claim 10, **characterized in that** the weight ratio of the first monomer, the second monomer, and the third monomer is 1:0.05-0.2:0.05-0.1.

**12.** The binder according to any one of claims 3 to 6, **characterized in that** the polymeric monomers of the organic polymer further comprise a second monomer, a third monomer, and a fourth monomer, wherein the second monomer comprises an organic substance containing an unsaturated nitrile group, the third monomer comprises an organic substance containing an unsaturated amide group, the fourth monomer comprises an organic substance containing an unsaturated alkenyl group, and a weight ratio of the first monomer, the second monomer, the third monomer, and the fourth monomer is 1:0-0.8:0-0.7:0-0.5.

**13.** The binder according to claim 12, **characterized in that** the weight ratio of the first monomer, the second monomer, the third monomer, and the fourth monomer is 1:0.05-0.6:0.05-0.3:0-0.2.

**14.** The binder according to claim 1 or 2, **characterized in that** particle size of the binder satisfies: 3 μm ≤ D50 ≤ 10 μm; and/or

particle size distribution of the binder = (D90 - D10)/D50, wherein the particle size distribution is less than or equal to 2.5; and/or
particle size of the inorganic substance is 0.0001 μm to 2 μm.

**15.** The binder according to claim 1 or 2, **characterized in that** particle size distribution of the binder = (D90 - D10)/D50, wherein the particle size distribution is less than 2; and/or

particle size of the inorganic substance is 0.01 μm to 0.5 μm; and/or
the inorganic substance comprises at least one of an oxide of silicon, an oxide of aluminum, an oxide of calcium, an oxide of zinc, an oxide of magnesium, sodium sulfate, sodium benzoate, calcium carbonate, and modified materials thereof.

**16.** The binder according to claim 1 or 2, **characterized in that** particle size distribution of the binder = (D90 - D10)/D50, wherein the particle size distribution is less than 1.8; and/or

particle size of the inorganic substance is 0.01 μm to 0.2 μm; and/or
based on mass of the binder, a mass percentage of the organic polymer is 50% to 99.9%; and/or the inorganic substance comprises at least one of silicon dioxide, aluminum oxide, zinc oxide, magnesium oxide, and sodium benzoate.

**17.** The binder according to claim 1 or 2, **characterized in that** based on mass of the binder, a mass percentage of the organic polymer is 60% to 99%; and/or
the inorganic substance comprises at least one of fumed silicon dioxide, silicon micro-powder, aluminum oxide, and sodium benzoate.

**18.** The binder according to claim 1 or 2, **characterized in that** based on mass of the binder, a mass percentage of the organic polymer is 70% to 99%; and/or
the inorganic substance comprises silicon dioxide, wherein silicon dioxide particle size in the silicon dioxide is 2 nm to 1 μm.

**19.** The binder according to claim 1 or 2, **characterized in that** an outer surface of the binder is uneven; and/or
the inorganic substance comprises silicon dioxide, wherein silicon dioxide particle size in the silicon dioxide is 5 nm to 100 nm.

**20.** The binder according to claim 1 or 2, **characterized in that** ionic conductivity of the binder is 0.3 $mS\cdot cm^{-1}$ to 0.6 $mS\cdot cm^{-1}$; and/or

the inorganic substance comprises silicon dioxide, wherein silicon dioxide particle size in the silicon dioxide is 5 nm to 20 nm.

**21.** A separator, **characterized by** comprising the binder according to any one of claims 1 to 20.

**22.** An electrode plate, **characterized by** comprising the binder according to any one of claims 1 to 20.

**23.** An electrode assembly, **characterized by** comprising at least one of the binder according to any one of claims 1 to 20, the separator according to claim 21, and the electrode plate according to claim 22.

**24.** A battery cell, **characterized by** comprising the electrode assembly according to claim 23.

**25.** A battery, **characterized by** comprising the battery cell according to claim 24.

**26.** An electric apparatus, **characterized by** comprising the battery cell according to claim 24 or the battery according to claim 25.

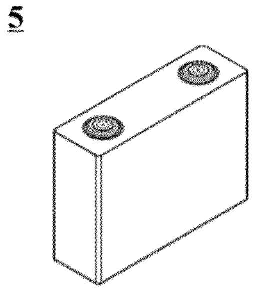


FIG. 1

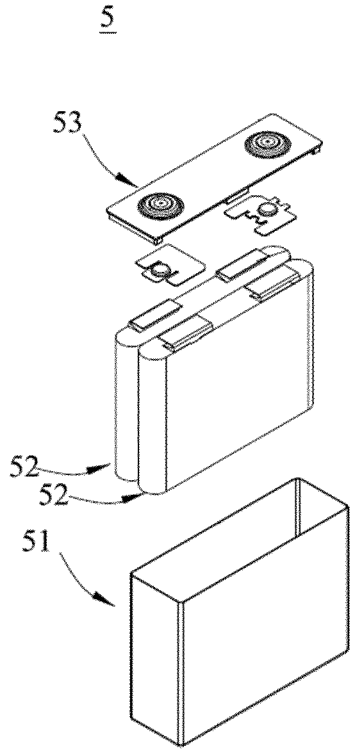


FIG. 2

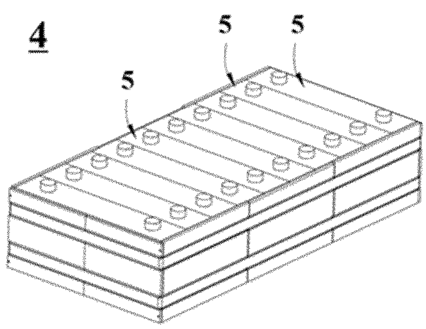


FIG. 3

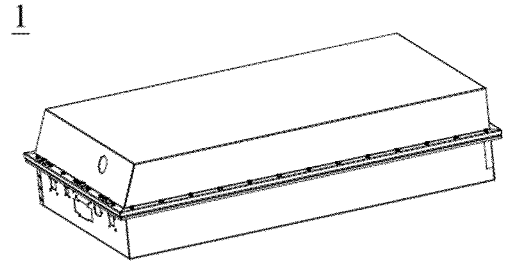


FIG. 4

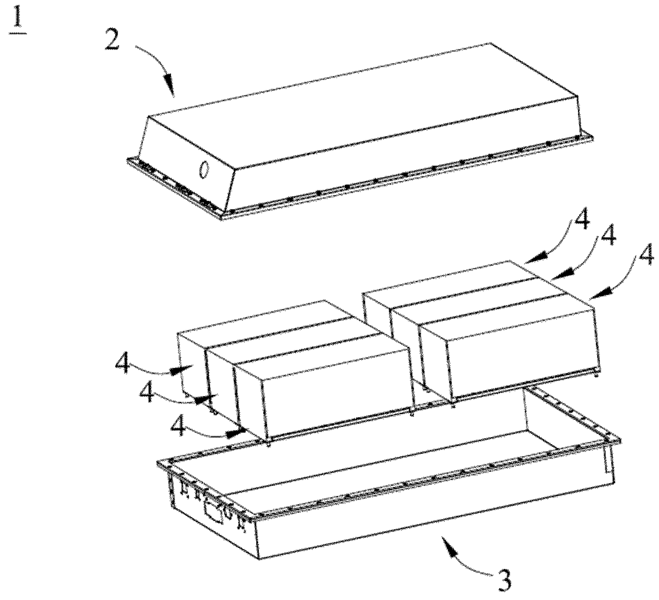


FIG. 5

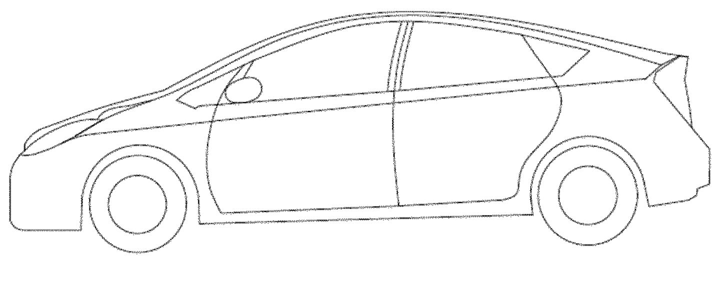

FIG. 6

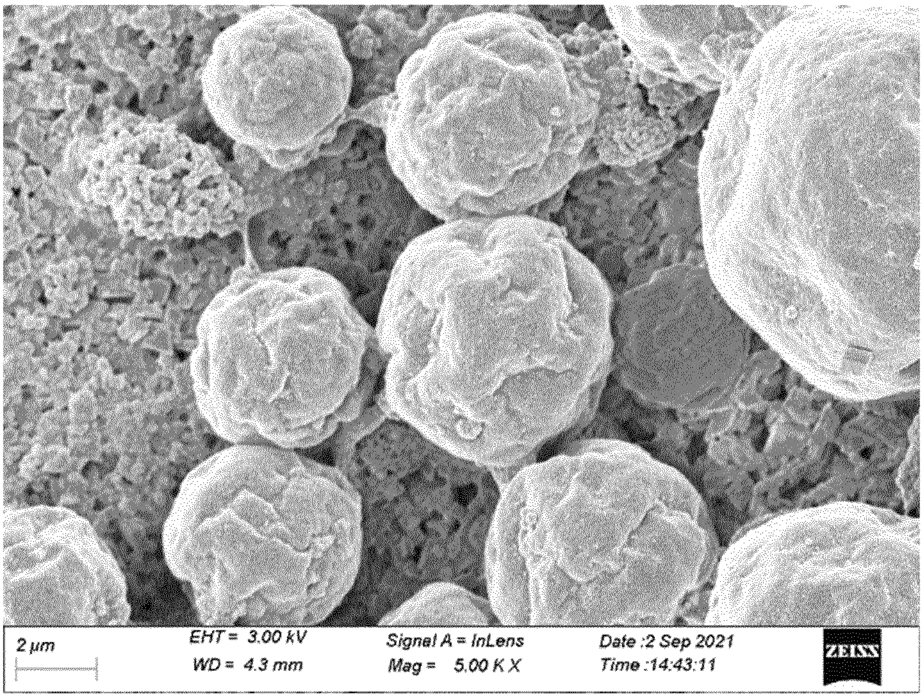
2 µm
EHT = 3.00 kV
WD = 4.3 mm
Signal A = InLens
Mag = 5.00 K X
Date :2 Sep 2021
Time :14:43:11
ZEISS

FIG. 7

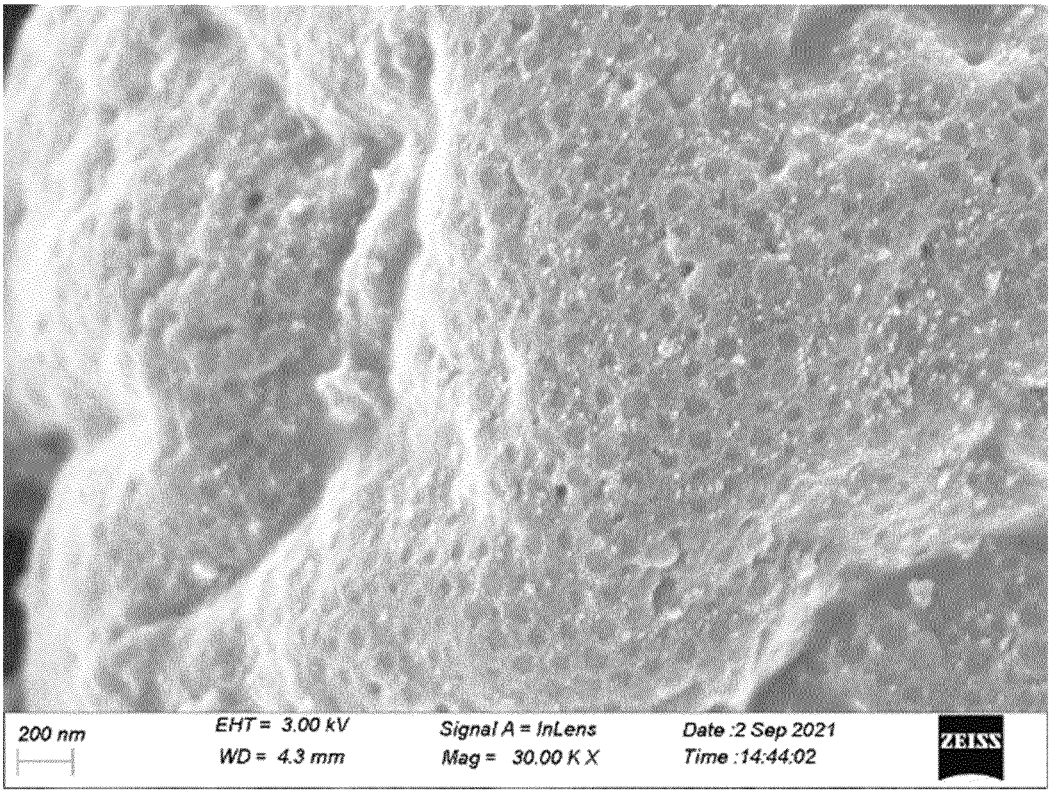
200 nm
EHT = 3.00 kV
WD = 4.3 mm
Signal A = InLens
Mag = 30.00 K X
Date :2 Sep 2021
Time :14:44:02
ZEISS

FIG. 8

**INTERNATIONAL SEARCH REPORT**

International application No. **PCT/CN2023/098414**

**A. CLASSIFICATION OF SUBJECT MATTER**

C09J133/14(2006.01)i; C09J133/08(2006.01)i; C09J11/04(2006.01)i; H01M50/431(2021.01)i; H01M50/443(2021.01)i

According to International Patent Classification (IPC) or to both national classification and IPC

**B. FIELDS SEARCHED**

Minimum documentation searched (classification system followed by classification symbols)

IPC:C09J,C08L,H01M

Documentation searched other than minimum documentation to the extent that such documents are included in the fields searched

Electronic data base consulted during the international search (name of data base and, where practicable, search terms used)

ISI Web of Science, CJFD, CNTXT, DWPI, ENTXTC: 玻璃化温度, 玻璃化转变温度, 电池, 电解液, 隔膜, 丙烯酸????酯, 丙烯腈, 丙烯酰胺, 无机物, 二氧化硅, 氧化铝, 碳酸钙, 粒径, 纳米, Tg, Glass temperature, glass transition temperature, battery, film, acrylate, Acrylonitrile, Acrylamide, Inorganic, Silica, Alumina, Calcium Carbonate, Particle Size, Nanometer, nm

**C. DOCUMENTS CONSIDERED TO BE RELEVANT**

| Category* | Citation of document, with indication, where appropriate, of the relevant passages | Relevant to claim No. |
|---|---|---|
| X | CN 112940650 A (SHENZHEN HAODIAN TECHNOLOGY CO., LTD.) 11 June 2021 (2021-06-11)<br>see description, paragraphs 7-61 | 1-26 |
| X | CN 113410576 A (WUXI ENERGY NEW MATERIALS TECHNOLOGY CO., LTD.) 17 September 2021 (2021-09-17)<br>see description, paragraphs 36-85 | 1-26 |
| X | CN 115260403 A (SHENZHEN HONGXING INNOVATIVE MATERIALS CO., LTD.) 01 November 2022 (2022-11-01)<br>see description, paragraphs 31-64 | 1-26 |
| X | KR 20140106301 A (SAMSUNG SDI CO., LTD.) 03 September 2014 (2014-09-03)<br>see description, paragraphs 27-143 | 1-26 |
| X | US 2014239239 A1 (SAMSUNG SDI CO., LTD.) 28 August 2014 (2014-08-28)<br>see description, paragraphs 13-62 | 1-26 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **25 September 2023** | **26 September 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2023/098414**

**C. DOCUMENTS CONSIDERED TO BE RELEVANT**

| Category* | Citation of document, with indication, where appropriate, of the relevant passages | Relevant to claim No. |
|---|---|---|
| X | WO 2022262210 A1 (WUXI ENERGY NEW MATERIALS TECHNOLOGY CO., LTD.) 22 December 2022 (2022-12-22) see description, page 2, second-to-last paragraph-page 6, fifth-to-last paragraph | 1-26 |
| A | CN 104769753 A (ZEON CORP.) 08 July 2015 (2015-07-08) see entire document | 1-26 |
| A | JP 2017098204 A (NIPPON ZEON CO., LTD.) 01 June 2017 (2017-06-01) see entire document | 1-26 |
| A | KR 20170023605 A (SAMSUNG SDI CO., LTD.) 06 March 2017 (2017-03-06) see entire document | 1-26 |
| A | US 2006058462 A1 (KIM HAE Y; RYU DONG J; KIM JU H; HAN CHANG S;) 16 March 2006 (2006-03-16) see entire document | 1-26 |
| A | US 2021028461 A1 (LG CHEMICAL LTD.) 28 January 2021 (2021-01-28) see entire document | 1-26 |

Form PCT/ISA/210 (second sheet) (July 2022)

**INTERNATIONAL SEARCH REPORT**
**Information on patent family members**

International application No.
**PCT/CN2023/098414**

| Patent document cited in search report | | | Publication date (day/month/year) | Patent family member(s) | | | Publication date (day/month/year) |
|---|---|---|---|---|---|---|---|
| CN | 112940650 | A | 11 June 2021 | None | | | |
| CN | 113410576 | A | 17 September 2021 | WO | 2022262210 | A1 | 22 December 2022 |
| CN | 115260403 | A | 01 November 2022 | None | | | |
| KR | 20140106301 | A | 03 September 2014 | US | 2014239239 | A1 | 28 August 2014 |
| | | | | KR | 20140112278 | A | 23 September 2014 |
| | | | | KR | 20140112280 | A | 23 September 2014 |
| | | | | KR | 20140112281 | A | 23 September 2014 |
| | | | | KR | 20140112282 | A | 23 September 2014 |
| | | | | US | 9570751 | B2 | 14 February 2017 |
| | | | | KR | 101805543 | B1 | 07 December 2017 |
| | | | | KR | 101805544 | B1 | 10 January 2018 |
| | | | | KR | 101814736 | B1 | 30 January 2018 |
| US | 2014239239 | A1 | 28 August 2014 | US | 9570751 | B2 | 14 February 2017 |
| WO | 2022262210 | A1 | 22 December 2022 | CN | 113410576 | A | 17 September 2021 |
| CN | 104769753 | A | 08 July 2015 | JP | 2018056142 | A | 05 April 2018 |
| | | | | JP | 6519670 | B2 | 29 May 2019 |
| | | | | WO | 2014081035 | A1 | 30 May 2014 |
| | | | | US | 2015311490 | A1 | 29 October 2015 |
| | | | | US | 9748547 | B2 | 29 August 2017 |
| | | | | JPWO | 2014081035 | A1 | 05 January 2017 |
| | | | | JP | 6314832 | B2 | 25 April 2018 |
| | | | | KR | 20150089000 | A | 04 August 2015 |
| | | | | KR | 102202318 | B1 | 12 January 2021 |
| | | | | EP | 2924781 | A1 | 30 September 2015 |
| | | | | EP | 2924781 | A4 | 27 April 2016 |
| JP | 2017098204 | A | 01 June 2017 | JP | 6759566 | B2 | 23 September 2020 |
| KR | 20170023605 | A | 06 March 2017 | KR | 101811328 | B1 | 22 December 2017 |
| US | 2006058462 | A1 | 16 March 2006 | JP | 2006513554 | A | 20 April 2006 |
| | | | | JP | 4768445 | B2 | 07 September 2011 |
| | | | | WO | 2004079841 | A1 | 16 September 2004 |
| | | | | EP | 1599912 | A1 | 30 November 2005 |
| | | | | EP | 1599912 | A4 | 26 August 2009 |
| | | | | EP | 1599912 | B1 | 15 April 2015 |
| | | | | KR | 20040078927 | A | 14 September 2004 |
| | | | | KR | 100491026 | B1 | 24 May 2005 |
| US | 2021028461 | A1 | 28 January 2021 | EP | 3678239 | A1 | 08 July 2020 |
| | | | | EP | 3678239 | A4 | 29 July 2020 |
| | | | | EP | 3678239 | B1 | 13 July 2022 |
| | | | | ES | 2925239 | T3 | 14 October 2022 |
| | | | | JP | 2020533771 | A | 19 November 2020 |
| | | | | JP | 7062160 | B2 | 06 May 2022 |
| | | | | WO | 2019054816 | A1 | 21 March 2019 |
| | | | | KR | 20190030983 | A | 25 March 2019 |
| | | | | KR | 102211109 | B1 | 02 February 2021 |
| | | | | US | 11611080 | B2 | 21 March 2023 |
| | | | | PL | 3678239 | T3 | 03 October 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202310015629